# EUROPÄISCHE PATENTSCHRIFT

(11) **EP 0 379 834 B1**
(45) Veröffentlichungstag und Bekanntmachung des Hinweises auf die Patenterteilung: **17.08.1994**
(21) Anmeldenummer: 89810064.9
(22) Anmeldetag: 25.01.1989
(51) Int. Cl.: B02C 17/16, F16B 21/16, F16D 1/10

(54) **Kupplungsvorrichtung, insbesondere an Apparaten zum Dispergieren**
Coupling device, especially for dispersion apparatuses
Dispositif d'accouplement, notamment pour disperseur

(43) Veröffentlichungstag der Anmeldung: 01.08.1990
(73) Patentinhaber: KINEMATICA AG, CH-6014 Littau (CH)
(72) Erfinder: Störzbach, Wolfram, CH-6000 Luzern (CH)
(74) Vertreter: Seehof, Michel

(56) Entgegenhaltungen:
- CH-A- 225 736
- DE-A- 3 401 391
- FR-A- 1 563 854
- GB-A- 940 527
- GB-A- 2 131 915
- US-A- 2 618 940
- US-A- 3 540 234
- US-A- 3 545 585
- US-A- 4 034 574

## Beschreibung

Die vorliegende Erfindung bezieht sich auf eine Kupplungsvorrichtung, insbesondere an Apparaten zum Dispergieren, mit einem am Gerät befestigten ersten Kupplungsteil und einem am zu kuppelnden Stab befestigten zweiten Kupplungsteil sowie auf eine Kupplungsvorrichtung zur kraftschlüssigen Verbindung von schnell drehenden Stäben.

Apparate zum Dispergieren, beispielsweise Vorrichtungen zur kontinuierlichen kinematischen Hochfrequenzbehandlung eines Stoffes oder Stoffgemisches sind unter anderem in der CH-A-663 551 beschrieben und werden vom Anmelder seit vielen Jahren hergestellt und weltweit vertrieben. Im allgemeinen bestehen solche Apparate aus einem Grundgerät mit Antrieb und einem Dispergier- oder Zerkleinerungsaggregat, das an das Gerät angeschlossen wird. Die Aggregate bestehen aus einem Edelstahl-Schaftrohr, welches am unteren Ende als Stator ausgebildet sein kann, in welchem eine Edelstahlwelle läuft, dessen unteres Ende als Rotor ausgebildet ist. Beim Anschluss des Aggregates, d.h. des oberen Endes des Aggregates, muss einerseits das Schaftrohr an das Gehäuse und andererseits die Welle mit dem Rotor an den Antrieb des Gerätes angeschlossen werden. Bei den Geräten des Standes der Technik ist am Schaftrohr eine Ueberwurfmutter befestigt, die auf ein enstprechendes Gewinde am Gehäuse des Gerätes geschraubt werden kann, wobei innerhalb der Ueberwurfmutter eine Dichtung eingebaut sein kann. Die kraftschlüssige Verbindung zwischen dem Antrieb und der Rotorwelle wird gemäss Stand der Technik durch einen antriebsseitigen Zylinder mit zwei Nuten und einer aggregatsseitigen Gabel hergestellt.

Die Schriften FR-A-1'563'854 und US-A-2'618'940 beschreiben Kupplungen, insbesondere zum Kuppeln biegsamer Wellen an Antriebsaggregate, bei denen hohlzylindrische Ansatzstücke an den beiden Kupplungshälften ineinandergeschoben und durch Kugeln arretiert werden. Die Kugeln werden durch einen Sicherungsring in die Kupplungsstellung gedrückt, der wiederum durch Federn in die Blockierstellung bewegt und darin gehalten wird.

Die Uebertragung der Drehbewegung vom Antrieb auf die Welle erfolgt durch im Inneren angeordnete Wellen- bzw. Hohlwellenenden, die beim Kuppeln ineinandergleiten. Die Enden sind dabei längsverzahnt oder weisen andere, längs der Welle verlaufende Ausnehmungen oder Erhebungen auf, die eine Drehbewegung der beiden Enden gegeneinander verhindern.

Nachteilig an den bekannten Ausführungen ist, dass die (Hohl-) Wellenenden nur in einer bestimmten Position zueinander ineinandergleiten können. Ein weiterer Nachteil besteht darin, dass die den Kupplungszustand sichende Feder verdeckt im Sicherungsring angeordnet ist. Durch die besonderen Betriebsbedingungen im Gebiet der vorliegenden Erfindung, in dem einerseits starke Erschütterungen während des Betriebs auf die Kupplung einwirken, auch mit stark korrosiven Medien gearbeitet wird, und oft besondere Reinheits- oder Sterilitätsanforderungen gelten, stellt diese Feder ein Problem dar, da sie wegen der mechanischen Belastung unhandlich stark ausgeführt und auch für die jeweilige Anwendung speziell ausgelegt werden muss, um Korrosion zu vermeiden, und einer eingehenden Reinigung nur unzureichend zugänglich ist.

Davon ausgehend ist es eine Aufgabe der vorliegenden Erfindung, für Dispergiergeräte mit im Betrieb im wesentlichen senkrecht nach unten gerichteter Antriebswelle eine Kupplung anzugeben, die mit geringem Kraftaufwand zu bedienen ist.

Diese Aufgaben werden erfindungsgemäss durch die in den unabhängigen Ansprüchen definierten Vorrichtungen gelöst.

Die Erfindung wird im folgenden anhand einer Zeichnung von Ausführungsbeispielen näher erläutert.
- Fig. 1: zeigt einen Längsschnitt durch ein erstes Ausführungsbeispiel der Erfindung,
- Fig. 2: zeigt einen Schnitt gemäss der Linie II-II in Fig. 1, jedoch ohne Schaftrohr,
- Fig. 3: zeigt eine Draufsicht auf das Schaftrohr gemäss Fig.1,
- Fig. 4: zeigt eine Ausführungsvariante zur Ausführung von Fig. 1, und
- Fig. 5: zeigt eine weitere Ausführungsvariante einer erfindungsgemässen Kupplungsvorrichtung.

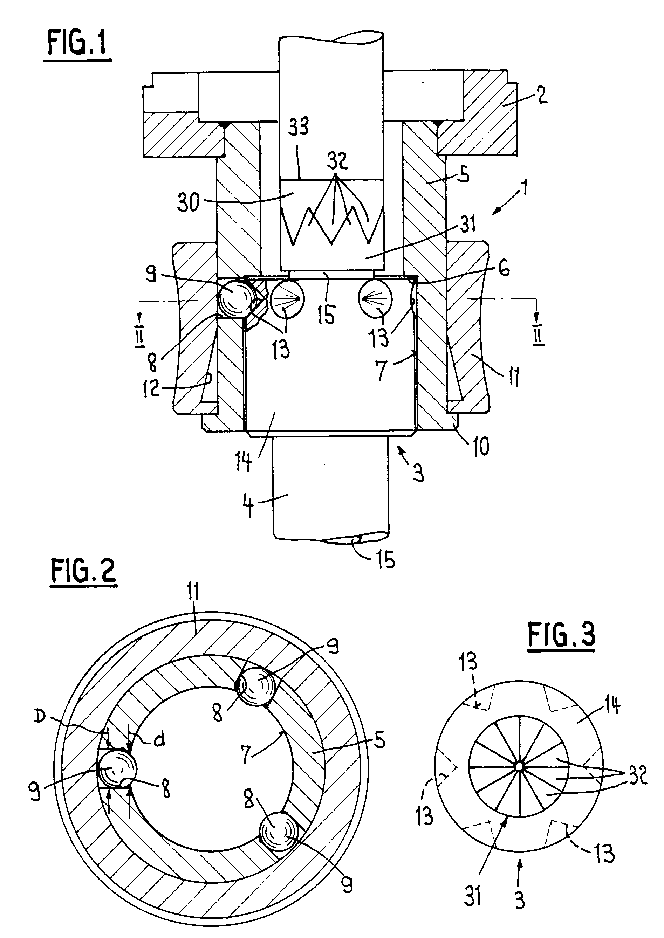

In Fig. 1 erkennt man den ersten Kupplungsteil 1, der mittels des Flansches 2 am hier nicht eingezeichneten Gerät befestigt werden kann, sowie den zweiten Kupplungsteil 3 mit dem Schaftrohr 4. In diesem ersten Ausführungsbeispiel weist das erste Kupplungsteil 1 einen zylindrischen Stutzen 5 auf, der in seinem unteren Teil einen Absatz 6 aufweist, dem sich ein exakt bearbeitetes zylindrisches Aufnahmestück 7 anschliesst, das der Aufnahme des zweiten Kupplungsteils 3 dient. Beim Absatz 6 weist das zylindrische Aufnahmestück 7 einige, hier beispielsweise drei über den Umfang verteilte Bohrungen 8 auf. In jeder Bohrung 8 befindet sich eine Kugel 9. Aus Figur 2 geht hervor, dass der Durchmesser D etwas grösser ist als der Durchmesser der Kugeln, bis auf den in das Innere des zylindrischen Teils einmündenden Bereich, dessen Durchmesser d etwas kleiner ist als der Durchmesser der Kugeln, damit diese zwar von hinten in die Bohrung hineingeschoben werden können, diese Bohrung jedoch nicht nach innen verlassen können. Der Stutzen 5 weist zuunterst, d.h. aggregatseitig, eine umlaufende Schulter 10 auf, die als Anschlag für den Ring 11 dient, der frei beweglich und konzentrisch um den Stutzen 5 angeordnet ist. Nach unten, d.h. gegen das nicht eingezeichnete Aggregat hin, weist der Ring eine Innenabschrägung 12 auf, so dass die Kugeln beim Hochziehen des Ringes aus der in Fig. 1 oder 2 dargestellten Stellung herausgleiten können und nicht mehr in das Stutzeninnere ragen.

Das zweite Kupplungsteil 3 ist ebenfalls zylindrisch gearbeitet und in das zylindrische Aufnahmestück 7 eingepasst. Oben, d.h. auf der Höhe der Kugeln, weist das zweite Kupplungsteil eine Anzahl von Vertiefungen 13 auf, die der Aufnahme der Kugeln 9 dienen. Im vorliegenden Beispiel sind es sechs Vertiefungen 13. In der in Figur 1 gezeichneten Stellung rasten die drei Kugeln 9 in drei Vertiefungen 13 ein, womit sie das Kupplungsteil sowohl in der Längsrichtung als auch in der Drehrichtung sichern. Dabei ist zu beachten, dass auf die mit dem Geräteschaft 4 verbundene Kupplungshülse 14 des Kupplungsteils praktisch keine Kräfte wirken, so dass nur das Gewicht des Aggregats an der Kupplung angreift. Insbesondere wirken nur ganz geringe, kaum feststellbare Drehkräfte auf das zweite Kupplungsteil. Die Rotorwelle 15 ist in hier nicht interessierender Weise im zweiten Kupplungsteil 3 gelagert.

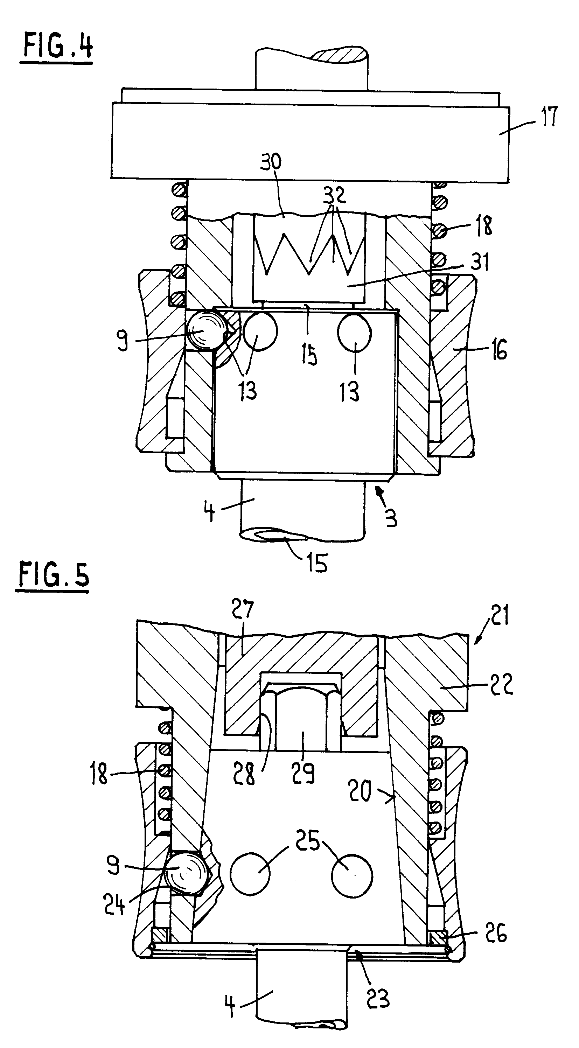

Wie aus Figur 1 hervorgeht, wird der Ring 11, der die Kugeln 9 in den Ausnehmungen 13 sichert, nur durch die eigene Schwerkraft gehalten, was in allen Fällen genügt, in denen das Aggregat vertikal verwendet wird, wie dies in den allermeisten Fällen vorkommt. Falls jedoch die Kupplung an Aggregaten verwendet wird, die nicht vertikal angeordnet sind, besteht die Gefahr, dass sich der Ring verschiebt und damit die Kugeln und hierdurch das zweite Kupplungsteil freigibt. Um dieser Gefahr zu begegnen, kann zwischen dem Ring 16 (siehe Fig. 4) und dem Flansch 17 des ersten Kupplungsteils eine Feder 18 angeordnet sein, die den Ring in die Schliessstellung drückt. Zur Aufnahme der Feder weist der Ring innen eine kreisförmige Ausfräsung 19 auf. Die übrigen Teile der Ausführungsvariante gemäss Fig. 4 sind dieselben wie bei derjenigen gemäss Fig. 1.

Im Ausführungsbeispiel gemäss Fig. 5 sind sowohl das Innere 20 des Stutzens 22 des ersten Kupplungsteils 21 als auch entsprechend das Aeussere des zweiten Kupplungsteils 23 konisch ausgebildet. Die konische Ausbildung beider Teile erleichtert das Einführen derselben, ist jedoch aufwendiger in deren Herstellung. In dieser Ausführungsvariante befinden sich die Kugeln 9 und somit die Bohrungen 24 und die Ausnehmungen 25 im unteren Drittel der Kupplungsteile, und auch diese Ausführungsvariante zeigt die Feder 18. In diesem Beispiel ist der Ring nach unten mittels Dichtung 26 gasdicht abgeschlossen.

Wie aus den Fig. 1 bis 5 sowie aus der vorgehenden Beschreibung hervorgeht, ist die Art der Kupplung zwischen dem Gerät und dem Schaftrohr, d.h. dem Stator, völlig unabhängig von der Art der Verbindung zwischen den beiden rotierenden Teilen, d.h. dem Antrieb des Gerätes und dem Rotor des Aggregates. Figur 5 beschreibt eine Kupplungsart von zwei rotierenden Teilen, in der der geräteseitige Antrieb einen Mitnehmer 27 mit sechseckiger Innenbohrung 28 aufweist, während das obere Ende 29 der Rotorwelle entsprechend sechseckig ausgebildet ist, wodurch eine kraftschlüssige Verbindung erzielt wird. Das Einführen eines sechseckigen Stabendes in eine sechseckige Bohrung verlangt eine behutsames Vorgehen und eine relativ exakte Bearbeitung sowohl der sechseckigen Innenbohrung als auch des sechseckigen Endes der Rotorwelle.

Bei der Suche nach einer weiteren Vereinfachung des Einsteckens des zweiten Kupplungsteils und eines besseren Kraftschlusses wurde die kraftschlüssige Verbindung gemäss den Figuren 1, 3 und 4 gefunden. Diese besteht aus dem antriebsseitigen Kupplungsteil 30 und dem aggregatsseitigen Kupplungsteil 31, die annähernd identisch gearbeitet sind. Beide Kupplungsteile 30 und 31 weisen je sechs Zähne 32 auf, die eine Flanke von 60° aufweisen. Durch die Verwendung von sechs Zähnen mit 60° Neigung wird einerseits erreicht, dass die Zähne sofort ohne Probieren oder Drehen ineinandergreifen und andererseits eine maximale Kraftübertragung vom Antrieb auf die Rotorwelle erzielt wird. Das antriebsseitige Kupplungsteil 30 wird vorzugsweise aus Kunststoff gefertigt und derart am Antrieb des Gerätes befestigt, dass eine Sollbruchstelle 33 entsteht, die bei Ueberlastung des Rotors abbricht und so das Gerät vor Ueberhitzung und weiterem Schaden bewahrt. Ausserdem ist das antriebsseitige Kupplungsteil aus Kunststoff elektrisch isolierend. Das aggregatsseitige Kupplungsteil besteht aus Metall und ist fest mit der Rotorwelle verbunden und mit dieser im zweiten Kupplungsteil 3 gelagert.

Als Materialien werden für die Kupplungsteile angepasste Materialien, im allgemeinen Edelstahl verwendet, wobei das zweite Kupplungsteil vorzugsweise gehärtet ist.

## Patentansprüche

1. Kupplungsvorrichtung an Apparaten zum Dispergieren mit im wesentlichen senkrechter, nach unten gerichteter Antriebswelle, mit einem am Gerät befestigten ersten Kupplungsteil (1, 21) und einem am zu kuppelnden Stab befestigten zweiten Kupplungsteil (3, 23), wobei das erste Kupplungsteil (1, 21) einen mit einem Flansch (2, 17) versehenen Stutzen (5, 22) aufweist, der mit mindestens zwei Bohrungen (8) zur Aufnahme je einer Kugel (9) und einem konzentrisch um ihn angeordneten Ring (11, 16) versehen ist, wobei der Durchmesser (D) der Bohrungen (8), mit Ausnahme eines einen kleineren Durchmesser (d) aufweisenden und in das Innere des Stutzens (5, 22) mündenden Bereiches, etwas grösser als der Durchmesser der Kugeln (9) ist und das zweite Kupplungsteil (3, 23), das in den Stutzen (5, 22) einführbar ist, Vertiefungen (13) zum Einrasten der Kugeln (9) aufweist, dadurch gekennzeichnet, dass der Ring (11, 16) frei beweglich und die untere Hälfte der Innenwand des Rings (11, 16) derart abgeschrägt ist, dass beim Hinaufschieben des Ringes (11, 16) gegen das Gerät die sonst in das Innere des Stutzens (5, 22) ragenden Kugeln (9) daraus entweichen können.

2. Kupplungsvorrichtung nach Anspruch 1, dadurch gekennzeichnet, dass das Aufnahmestück (7) im Stutzen (5) des ersten Kupplungsteils (1) und das zweite Kupplungsteil (3) zylindrisch sind und das erste Kupplungsteil (1) drei Bohrungen (8) mit je einer Kugel (9) und das zweite Kupplungsteil (3) sechs Vertiefungen (13) aufweist.

3. Kupplungsvorrichtung nach Anspruch 1, dadurch gekennzeichnet, dass das Aufnahmestück (20) im Stutzen (22) des ersten Kupplungsteils (21) und das zweite Kupplungsteil (23) konisch sind, und das erste Kupplungsteil (21) drei Bohrungen (24) mit je einer Kugel (9) aufweist.

4. Kupplungsvorrichtung nach einem der Ansprüche 1 bis 3, dadurch gekennzeichnet, dass das oberste Stück (29) des zu kuppelnden Stabes und der den Stab aufnehmende Mitnehmer (27) des Geräteantriebs sechseckig ausgebildet sind.

5. Kupplungsvorrichtung nach einem der Ansprüche 1 bis 4 zur kraftschlüssigen Verbindung von schnell drehenden Stäben, dadurch gekennzeichnet, dass beide zu verbindenden Kupplungsteile (30, 31) je sechs Zähne (32) mit einer Flanke von 60° aufweisen.

6. Kupplungsvorrichtung nach Anspruch 5 an einem Dispergiergerät, dadurch gekennzeichnet, dass das antriebsseitige Kupplungsteil (30) aus Kunststoff gefertigt ist und über eine Sollbruchstelle (33) mit dem Antrieb des Gerätes verbunden ist.

## Claims

1. Coupling device on dispersing apparatuses, containing an essentially vertical, downwards directed driving shaft and comprising a first coupling half (1, 21) fastened to the apparatus and a second coupling half (3, 23) fastened to the rod to be coupled, said first coupling half (1, 21) comprising a socket (5, 22) equipped with a flange (2, 17), the socket having at least two bores (8) for receiving one ball (9) each and being fitted out with an outer concentric ring (11, 16), the diameter (D) of the bores (8) being slightly greater than that of the balls (9) with the exception of the bore portion opening into the interior of the socket (5, 22) which has a smaller diameter (d), and said second coupling half (3, 23) which is to be inserted into the socket (5, 22) comprising recesses (13) for the catching of the balls (9), characterised by the fact that the ring (11, 16) is freely movable, and that the lower half of the inner wall of the ring (11, 16) is bevelled in such a manner that the balls (9) normally protruding into the interior of the socket (5, 22) can escape therefrom when the ring (11, 16) is lifted against the apparatus.

2. Coupling device according to claim 1, characterised by the fact that the receiving portion (7) within the socket (5) of the first coupling half (1) and the second coupling half (3) are cylindrically shaped, that the first coupling half (1) comprises three bores (8) containing one ball (9) each, and that the second coupling half (3) comprises six recesses (13).

3. Coupling device according to claim 1, characterised by the fact that the receiving portion (20) within the socket (22) of the first coupling half (21) and the second coupling half (23) are conically shaped, and that the first coupling half (21) comprises three bores (24) containing one ball (9) each.

4. Coupling device according to any one of claims 1 to 3, characterised by the fact that the uppermost portion (29) of the rod to be coupled and the driving hole (27) of the apparatus driving device which receives the rod, are hexagonally shaped.

5. Coupling device according to any one of claims 1 to 4 for the non-positive connection of rapidly rotating rods, characterised by the fact that that both coupling halves to be connected (30, 31) each have six teeth (32) having a flank of 60°.

6. Coupling device according to claim 5 on a dispersing apparatus, characterised by the fact that the coupling half (30) on the driving side is made from synthetic material and is connected to the driving mechanism via a predetermined breaking point.

## Revendications

1. Dispositif d'accouplement sur appareils disperseurs, comprenant un arbre d'entraînement essentiellement vertical et dirigé vers le bas, un premier élément d'accouplement (1, 21) fixé à l'appareil et un second élément d'accouplement (3, 23) fixé à la tige à accoupler, le premier élément d'accouplement (1, 21) comprenant un manchon (5, 22) équipé d'une flange (2, 17), le manchon étant pourvu d'au moins deux alésages (8) pour recevoir une bille (9) chacun et d'un anneau extérieur concentrique (11, 16), le diamètre (D) des alésages (8) étant légèrement plus grand que le diamètre des billes (9), à l'exception d'une zone ayant un diamètre (d) plus petit et située à l'embouchure des alésages dans l'intérieur du manchon (5, 22), le second élément d'accouplement (3, 23) pouvant être introduit dans le manchon (5, 22) comprenant des évidements (13) pour le verrouillage des billes (9), caractérisé par le fait que l'anneau (11, 16) est librement mobile, et que la moitié inférieure de la paroi intérieure de l'anneau (11, 16) est chanfreinée de telle manière que les billes (9) pénétrant normalement dans l'intérieur du manchon (5, 22) peuvent en échapper lorsque l'anneau (11, 16) est poussé vers le haut.

2. Dispositif d'accouplement selon la revendication 1, caractérisé en ce que la partie de logement (7) du manchon (5) du premier élément d'accouplement (1) et le second élément d'accouplement (3) sont cylindriques, que le premier élément d'accouplement (1) comporte trois alésages (8) contenant une bille (9) chacun, et que le second élément d'accouplement (3 présente six évidements (13).

3. Dispositif d'accouplement selon la revendication 1, caractérisé en ce que la partie de logement (20) du manchon (22) du premier élément d'accouplement (21) et le second élément d'accouplement (23) sont coniques, et que le premier élément d'accouplement (21) comporte trois alésages (24) contenant une bille (9) chacun.

4. Dispositif d'accouplement selon l'une quelconque des revendications 1 à 3, caractérisé en ce que la partie la plus haute (29) de la tige à accoupler et l'entraîneur (27) du dispositif moteur de l'appareil recevant la tige, ont une forme hexagonale.

5. Dispositif d'accouplement selon l'une quelconque des revendications 1 à 4 pour l'accouplement sans glissement de tiges à rotation rapide, caractérisé en ce que les deux éléments d'accouplement à connecter (30, 31) présentent six dents (32) ayant chacun un flanc de 60°.

6. Dispositif d'accouplement selon la revendication 5 sur un appareil disperseur, caractérisé en ce que l'élément d'accouplement (30) du côté du dispositif moteur est fabriqué en matière synthétique et est relié par un point destiné à la rupture (33) au dispositif moteur de l'appareil.
